# EUROPÄISCHE PATENTANMELDUNG

(11) **EP 2 757 356 A1**
(43) Veröffentlichungstag der Anmeldung: **23.07.2014**
(21) Anmeldenummer: 13152184.1
(22) Anmeldetag: 22.01.2013
(51) Int. Cl.: G01J 3/02, G01J 3/28, G02B 13/14, G02B 27/00

(54) **Multispektrale optische Vorrichtung**

(71) Anmelder: SwissOptic AG, 9435 Heerbrugg (CH)
(72) Erfinder: Tchernook, Andrei, 9445 Rebstein (CH)
(74) Vertreter: Hepp Wenger Ryffel AG

(57) **Zusammenfassung**

Die vorliegende Erfindung betrifft eine Vorrichtung (1), umfassend eine Eingangsapertur (2), mindestens ein multispektrales optisches System (3) und mindestens ein Aktivoptikelement (4) sowie vorzugsweise derart ausgebildete Steuerelemente für das mindestens eine Aktivoptikelement (4), dass sie eine Abberationskorrektur von Spektralkanälen durch das mindestens eine Aktivoptikelement (4) nach einem Zeitmultiplexverfahren bewirken. Die vorliegende Erfindung betrifft weiterhin ein Verfahren zur multispektralen Beobachtung, umfassend die Schritte der Einleitung mehrerer Spektralkanäle in eine Vorrichtung (1) durch eine Eingangsapertur (2) zu einem multispektralen optischen System (3), und die anschliessende Korrektur von Restaberration in den Spektralkanälen mit Hilfe eines Aktivoptikelements (4), wobei die Abberationskorrektur vorzugsweise nach einem Zeitmultiplexverfahren erfolgt.

## Beschreibung

Die vorliegende Erfindung betrifft eine multispektrale optische Vorrichtung, welche gegenüber bekannten multispektralen optischen Vorrichtungen eine verringerte Restaberration aufweist, sowie ein Verfahren zur Verringerung von Restaberration in einer multispektralen optischen Vorrichtung.

Die gängigsten Beobachtungsinstrumente wie Fernrohre oder Ferngläser erlauben die Beobachtung eines Objekts im sichtbaren Bereich des elektromagnetischen Spektrums. Bekannte Nachtsichtgeräte nutzen andererseits den Mittelwellen- und Langwellen-Infrarotbereich des elektromagnetischen Spektrums für Beobachtungszwecke, der Informationen über den thermischen Zustand des Objekts liefert. Andere Beobachtungssysteme wie das in Flugzeugen eingesetzte EVS (enhanced vision system) ermögliche eine bessere Sicht in schwierigen Wetterverhältnissen wie z.B. Nebel und Niederschläge durch Detektion im Nah- und Kurzwellen-Infrarotbereich. Diese Arten von Detektion ermöglichen aber nicht die Sammlung sämtlicher verfügbarer Informationen über das Beobachtungsobjekt durch eine Apertur.

Die gleichzeitige Beobachtung eines Objekts in mehreren Bereichen des elektromagnetischen Spektrums wird als multispektrale Beobachtung bezeichnet. Bei einer multispektralen Beobachtung wird üblicherweise die Detektion von mindestens zwei Wellenlängenbereichen in einem einzigen System kombiniert. Die aufgrund der Transparenz der Atmosphäre bevorzugt beobachteten Wellenlängenbereiche sind hierbei der sichtbare Bereich (VIS, 400-700 nm), der Ultraviolettbereich (UV, 250-400 nm), der Nahinfrarotbereich (NIR, 700-1000 nm), der Kurzwellen-Infrarotbereich (SWIR, 1000-2500 nm), der Mittelwellen-Infrarotbereich (MWIR, 3000-5000 nm) und der Langwellen-Infrarotbereich (LWIR, 8000-12000 nm). Man teilt diese Bereiche auch in einen reflektiven Bandbereich (EO) aus UV, VIS, NIR und SWIR und einen thermalen Bandbereich (IR) aus MWIR und LWIR ein.

Systeme zur multispektralen Beobachtung können am einfachsten dadurch realisiert werden, dass für jeden beobachteten Wellenlängenbereich (Spektralkanal) eine separate Eingangs- und Ausgangsapertur vorgesehen ist. In der Regel teilen sich die verschiedenen Sensoren des Systems keine gemeinsame Optik, weswegen ein derartiges Multiapertur-System vergleichsweise einfach aufgebaut sein kann.

Multiapertur-Systeme weisen aber diverse Nachteile auf. Durch die Notwendigkeit der Bereitstellung getrennter Eingangs- und Ausgangsaperturen, welche zu entsprechenden Sensoren führen, sind diese Systeme zwangsläufig sehr gross und schwer. Dies macht sie für diverse Anwendungen, beispielsweise als tragbare Ferngläser oder für flugzeugbasierte Systeme, sehr unattraktiv. Zudem ist bei Multiapertur-Systemen ein Parallaxenfehler unvermeidlich.

Zur Vermeidung dieser Nachteile wurde ein System mit einer einzigen Eingangs- und Ausgangsapertur vorgeschlagen, bei welchem die Detektion mindestens zwei verschiedener Wellenlängenbereiche über einen gemeinsamen optischen Eingang erfolgt. Ein derartiges System wird als multispektrales optisches System bezeichnet (auch als System mit "common aperture" beziehungsweise "shared aperture" bezeichnet). Ein multispektrales optisches System (common aperture-System) kann deutlich kompakter und leichter werden und weist kein Parallaxenproblem auf. Dadurch kann mit einer multispektralen Optik leichter eine Zusammenführung der in verschiedenen Wellenlängenbereichen aufgenommenen Bilder (image fusion) durchgeführt werden.

Die Realisierung multispektraler Optiken (common aperture-Optiken) ist allerdings schwierig. Multispektrale Optiken (common aperture-Optiken) auf der Basis herkömmlicher refraktiver Optiken sind nur sehr eingeschränkt herstellbar, da nur wenige Materialien die Anforderungen an Durchlässigkeit über den geforderten breiten Wellenlängenbereich und geringer Dispersion erfüllen. Die im Stand der Technik vorgeschlagenen Materialien (vgl. Thompson: "Common aperture multi-spectral optics for military applications", in: Infraed technology and applications XXXVIII, Proc. of SPIE, Vol. 8353, 83531X, 2012) zur Herstellung refraktiver multispektraler Optiken sind insbesondere für den Einsatz unter harschen Bedingungen nur bedingt geeignet, denen beispielsweise Ferngläser standhalten müssen. Im Vergleich zu optischen Gläsern weisen diese Materialien zudem eine geringere Durchlässigkeit (Transmission) auf. Antireflexbeschichtungen (AR-Beschichtungen), die für einen sehr breiten Spektralbereich oder mehrere Spektralbereiche bestimmt sind, haben eine niedrigere Transmission im Vergleich mit den Antireflex-Beschichtungen (AR-Beschichtungen) für die einzelnen Spektralbereiche. Dadurch wird die Transmissionsproblematik der refraktiven multispektralen Common-Apertur-Optiken zusätzlich verschärft. Andererseits entstehen Konflikte beziehungsweise die Notwendigkeit zu grossen Kompromissen in der Aberrationskorrektur unterschiedlicher Spektralkanäle, insbesondere im Temperaturgang (Athermalisierung).

Als Alternative wurde die Realisierung multispektraler Optiken auf der Basis von reflektiven Optiken (Spiegeloptiken) vorgeschlagen. Spiegeloptiken besitzen den Vorteil von Wellenlängenunabhängigkeit, d.h. bei Spiegeloptiken besteht das Problem von Dispersion nicht (James: "Multispectral imaging: Imaging systems can benefit from reflective optics", www.laserfocusworld.com/ articles/2010/multispectral-imaging._saveArticle.html) und ihre Aberrationen sind intrinsisch für alle Spektralkanäle gleich oder besser als der kurzwelligste verwendete Spektralbereich korrigiert. Die Temperaturabhängigkeit der reflektiven Systeme wird eliminiert, wenn Spiegel und die Trägerstruktur den gleichen Wärmeausdehnungskoeffizient (CTE) aufweisen.

Eine multispektrale Abbildungsoptik auf der Basis von Spiegeloptiken zum Einsatz in Flugkörpern ist in der EP-1 862 837 A1 beschrieben. Dieses System umfasst einen Primärspiegel und einen Sekundärspiegel, wobei einfallendes Licht vom Primärspiegel auf den Sekundärspiegel und von diesem durch eine Öffnung im Primärspiegel aus der Optik herausgeleitet wird (Cassegrain-Optik). Dem Sekundärspiegel ist ein Linsenpaar aus einer positiven und einer negativen Linse nachgeordnet, um sphärische Aberration zu korrigieren. Hier relativieren leider die erforderlichen Linsen die Vorteile der reflektiven Optiken.

In der US-6,201,230 B1 ist ein optisches System für Marschflugkörper beschrieben, bei welchem eine dynamische Korrektur von Abberation dadurch erfolgt, dass der Sekundärspiegel einer Cassegrain-Optik als adaptive Optik (deformierbarer Spiegel) ausgestaltet ist. Eine derartige Korrektur von Abberation ist jedoch nicht optimal, da sie eine Modifikation der multispektralen Optik an sich erfordert.

Die so realisierbaren multispektralen Optiken sind kompakt und leicht. Sie sind aber auf das Cassegrain-Schema beschränkt, das intrinsische Nachteile wie einen zentralen Blindfleck aufweist. Andererseits sind die für kompakte Lösungen mit alternativen Aufbauschemata erforderlichen Freiformoptiken mit der geforderten Präzision zur Abberationskontrolle nur sehr aufwendig herstellbar und damit teuer. Für Zoom-Optiken eignen sie sich nur sehr bedingt, und sie sind schwer montierbar und anfällig für Umwelteinflüsse.

Ein weiteres grundsätzliches Problem ist die Korrektur thermaler Effekte (Athermalisierung), welche oftmals nur durch eine entsprechende Beschränkung des Designs der multispektralen Optik (Betrieb nur innerhalb eines limitierten Temperaturbereichs) oder durch Bereitstellung einer Klimatisierung der multispektralen Optik erreicht werden kann.

Es bestand daher Bedarf für eine multispektrale optische Vorrichtung, welche die vorstehend skizzierten Nachteile des Stands der Technik nicht aufweist.

Die vorstehende Aufgabe wird gelöst durch eine Vorrichtung, umfassend eine Eingangsapertur, mindestens ein multispektrales optisches System und mindestens ein Aktivoptikelement, welches bei nach Cassegrain-Schema aufgebauten multispektralen optischen Systemen ausserhalb des mindestens einen multispektralen optischen Systems und bei anderen multispektralen optischen Systemen ausserhalb, zwischen oder innerhalb der multispektralen optischen Systeme angeordnet ist.

Gemäss einer weiteren Ausführungsform wird die vorstehende Aufgabe gelöst durch eine Vorrichtung, umfassend eine Eingangsapertur, mindestens ein multispektrales optisches System, mindestens ein Aktivoptikelement, sowie derart ausgebildete Steuerelemente für das mindestens eine Aktivoptikelement, dass sie eine dass sie eine Abberationskorrektur von Spektralkanälen durch das mindestens eine Aktivoptikelement nach einem Zeitmultiplexverfahren bewirken.

Die vorliegende Erfindung beruht auf dem Prinzip, für eine Vorrichtung zur multispektralen Beobachtung ein multispektrales optisches System mit entspannten Toleranzen einzusetzen. Erfindungsgemäss wird daher ein multispektrales optisches System verwendet, welches eine mässige Korrektur der Abberation in allen Spektralkanälen bereitstellt. Es hat sich aber erfindungsgemäss gezeigt, dass die erforderliche Korrektur von Restaberration zuverlässig durch die Bereitstellung mindestens eines im Strahlengang angeordneten Aktivoptikelements, welches sich vorzugsweise ausserhalb des multispektralen optischen Systems befindet, erreicht werden kann. Unter einer mässigen Korrektur der Abberation in allen Spektralkanälen durch das multispektrale optische System wird hierbei verstanden, dass die Restaberration in diesem Fall den Funktionsbereich des Aktivoptikelements nicht übersteigen darf, d.h. die Restabberation sollte vorzugsweise innerhalb eines Bereichs von ca. ± 60µm liegen.

Gemäss einer besonders bevorzugten Ausführungsform der vorliegenden Erfindung wird die Korrektur von Restaberration für jeden detektierten Wellenlängenbereich zeitlich versetzt (multiplex) durchgeführt (Zeitmultiplexverfahren). In der US-6,201,230 B1 werden die Aberrationen, die durch die Bewegung der Eingangsapertur über eine konforme Eingangsoptik (optischen Dom) eingeführt werden, nur dynamisch korrigiert.

Gemäss der vorliegenden Erfindung werden unter dem Begriff "Restabberation" neben der eigentlichen, von dem multispektralen optischen System nicht korrigierten Abberation auch zu korrigierende Umwelteinflüsse verstanden.

Mit der erfindungsgemässen Vorrichtung können als Spektralkanäle vorzugsweise der sichtbare Bereich (VIS, 400-700 nm), der ultraviolettere Bereich (UV, 250-400 nm), der Nahinfrarotbereich (NIR, 700-1000 nm), der Kurzwellen-Infrarotbereich (SWIR, 1000-2500 nm), der Mittelwellen-Infrarotbereich (MWIR, 3000-5000 nm) und der Langwellen-Infrarotbereich (LWIR, 8000-12000 nm) detektiert werden.

Zur Abschirmung von der Umgebung ist die erfindungsgemässe multispektrale Optik in einem Gehäuse angeordnet. Das Gehäuse enthält zumindest ein multispektrales optisches System sowie mindestens ein Aktivoptikelement und weist eine Eingangsapertur auf, durch welche sämtliche zu detektierende Strahlung eintritt. Die Eingangsapertur ist aus einem Material gefertigt, welches für mindestens zwei Spektralbereiche der zu detektierenden Strahlung durchlässig ist. Erfindungsgemäss können als Material für die Eingangsapertur beispielsweise ZnS (multispektrale Form), Saphir oder Calciumfluorid eingesetzt werden. Vorzugsweise ist die Eingangsapertur ein planes Fenster. Die Eingangsapertur kann aber auch andere Form aufweisen, beispielsweise eine domartig gewölbte Form.

Nach dem Eintritt durch die Eingangsapertur gelangt die zu detektierende Strahlung in das multispektrale optische System. Erfindungsgemäss umfasst das multispektrale optische System eine Anordnung optischer Elemente, welche von allen zu detektierenden Spektralkanälen gemeinsam genutzt werden. Erfindungsgemäss kann jede herkömmliche multispektrale Optik verwendet werden. Beispielhaft seien reflektive Optiken (Spiegeloptiken), refraktive Optiken oder katadioptrische Systeme (Spiegellinsenoptiken) genannt. Erfindungsgemäss bevorzugt ist ein reflektives multispektrales optisches System (Spiegeloptik).

Gemäss einer Ausführungsform der vorliegenden Erfindung kann die Vorrichtung mehr als ein derartiges multispektrales optisches System aufweisen, beispielsweise zwei derartige multispektrale optische Systeme.

Wie vorstehend ausgeführt wurden im Stand der Technik Anstrengungen unternommen, erforderliche Korrekturen der zu detektierenden Strahlung direkt im nach dem Cassegrain-Schema aufgebauten multispektralen optischen System vorzunehmen. Unter einer nach Cassegrain-Schema aufgebauten Optik wird ein optisches System verstanden, bei welchem einfallende Strahlung auf einen Hauptspiegel (Primärspiegel) fällt, von diesem gebündelt, auf einen Sekundärspiegel (Fangspiegel) zurückgeworfen und von diesem durch eine Öffnung in der Mitte des Hauptspiegels aus der Optik zu nachgeordneten Elementen geleitet wird. Dies hat sich als sehr problematisch und kostspielig erwiesen, da jeder Spektralkanal (d.h. jeder zu detektierende Wellenlängenbereich) in sich zuverlässig korrigiert werden muss. Zudem weist eine nach Cassegrain-Schema aufgebaute Optik intrinsische Nachteile wie einen Blindfleck auf.

Erfindungsgemäss wird dieses Problem dadurch überwunden, dass die erforderliche Korrektur durch mindestens ein Aktivoptikelement im Wesentlichen ausserhalb des multispektralen optischen Systems und/oder vorzugsweise nach einem Zeitmultiplexverfahren erfolgt. Im multispektralen optischen System selbst werden sämtliche Spektralkanäle durch die Verwendung herkömmlicher optischer Elemente nur mässig korrigiert. Es entfallen dadurch hohe Anforderungen an die Präzision von Freiformelementen, wodurch die erfindungsgemässe Vorrichtung vergleichsweise preiswert gefertigt werden kann. Auch die Anforderungen an die Positionierungsgenauigkeit der optischen Elemente des multispektralen optischen Systems werden durch den Einsatz korrigierender Aktivoptikelemente deutlich verringert.

Die Strahlung wird zu mindestens einem, vorzugsweise 1 bis 5, bevorzugter 1 bis 3, besonders bevorzugt 1 Aktivoptikelement geführt, welches sich im Strahlengang, vorzugsweise ebenfalls in dem Gehäuse befindet. Als Aktivoptikelement wird erfindungsgemäss ein optisches Element bezeichnet, dessen optische Eigenschaften durch eine dynamische Veränderung seiner Form oder Struktur oder Lage modifiziert werden können. Beispielhafte Aktivoptikelemente, auch als adaptive Optikelemente bezeichnet, sind elektrisch betriebene flexible Spiegel (Adaptivspiegel), MEMS-Spiegel, flexible Linsen oder räumliche pixellierte Phasenmodulatoren. Derartige Aktivoptikelemente sind bekannt und müssen hier nicht im Detail erläutert werden. Beispielhaft sei auf die US-6,201,230 B1, Sp. 2, Z. 35-50, und die dort zitierte Literatur verwiesen.

Erfindungsgemäss bevorzugt wird als Aktivoptikelement ein flexibler Spiegel eingesetzt. Die Oberflächenform und somit die reflektierte Wellenfront des Spiegels kann vorzugsweise durch elektrostatische Kräfte, magnetische Kräfte oder piezoelektrische Kräfte modifiziert werden. Eine Defokussierung aufgrund von thermalen Effekten beziehungsweise zwischen verschiedenen Spektralkanälen kann besonders bevorzugt mit Hilfe eines flexiblen Spiegels kompensiert werden. Analog kann auch ein pixellierter Phasenmodulator eingesetzt werden. Hier wird die reflektierte Wellenfront durch die unterschiedliche Phasenmodulation in separaten Pixel korrigiert. Im Transmissionsmodus kann auch eine flexible Linse eingesetzt werden; diese ist allerdings nicht für den IR-Bereich verwendbar.

Je nach Bedarf kann das mindestens eine Aktivoptikelement durch kontinuierliche oder gepulste Signale gesteuert beziehungsweise betätigt werden. Die Signale werden erfindungsgemäss bevorzugt anhand von Informationen betreffend die die konkrete Optikausführung und deren Umweltverhalten ausgelöst. Diese Informationen werden als Teil des Herstellungsverfahrens der erfindungsgemässen Vorrichtung gesammelt und durch Umweltsensoren, welche im erfindungsgemäßen System angeordnet sind, aufgenommen. Es erfolgt dann vorzugsweise eine Einstellung des mindestens einen Aktivoptikelements. Es ist möglich, entsprechende Daten auf einem Speichermodul (Chip) zu hinterlegen und zur Kalibrierung beziehungsweise Steuerung des Aktivoptikelements zu verwenden. Es können zur Steuerung des mindestens einen Aktivoptikelements beispielsweise die Umgebungstemperatur oder der Umgebungsdruck, herangezogen werden. Die so erhaltenen Informationen werden einem Prozessor zugeführt und dort verarbeitet. Der Prozessor erzeugt das Steuersignal für das mindestens eine Aktivoptikelement und bewirkt dessen Deformation.

Erfindungsgemäss ist das mindestens eine Aktivoptikelement bei nach Cassegrain-Schema aufgebauten multispektralen optischen Systemen ausserhalb des mindestens einen multispektralen optischen Systems und bei anderen multispektralen optischen Systemen ausserhalb, zwischen oder innerhalb der multispektralen optischen Systeme angeordnet.

Die vorliegende Erfindung betrifft auch ein Verfahren zur multispektralen Beobachtung, umfassend die Schritte der Einleitung mehrerer Spektralkanäle in eine Vorrichtung durch eine Eingangsapertur zu mindestens einem multispektralen optischen System, und die die anschliessende Korrektur von Restaberration in den Spektralkanälen mit Hilfe mindestens eines Aktivoptikelements, welches bei nach Cassegrain-Schema aufgebauten multispektralen optischen Systemen ausserhalb des mindestens einen multispektralen optischen Systems (3) und bei anderen multispektralen optischen Systemen ausserhalb, zwischen oder innerhalb der multispektralen optischen Systeme (3) angeordnet ist.

Die vorliegende Erfindung betrifft weiterhin ein Verfahren zur multispektralen Beobachtung, umfassend die Schritte der Einleitung mehrerer Spektralkanäle in eine Vorrichtung durch eine Eingangsapertur zu mindestens einem multispektralen optischen System, und die die anschliessende Korrektur von Restaberration in den Spektralkanälen mit Hilfe mindestens eines Aktivoptikelements, wobei die Abberationskorrektur nach einem Zeitmultiplexverfahren erfolgt.

Vorzugsweise wird das erfindungsgemässe Verfahren in der hier beschriebenen Vorrichtung (multispektralen Optik) durchgeführt.

Erfindungsgemäss besonders bevorzugt erfolgt die Korrektur von Restaberrationen der gleichzeitig in das multispektrale optische System eingeführten Spektralkanäle für jeden zu detektierenden Spektralanal zeitlich getrennt (Zeitmultiplexverfahren). Multiplexverfahren sind hinlänglich bekannt (siehe z.B. http://de.wikipedia.org/wiki/Multiplexverfahren) und müssen hier nicht näher erläutert werden. Jeder Spektralkanal wird in einem definierten Zeitfenster korrigiert, d.h. nur in einem Bruchteil der gesamten Funktionszeit. Die erfindungsgemässe Vorrichtung umfasst bei dieser Ausführungsform Steuerelemente zur multiplexen Korrektur der Spektralkanäle durch das mindestens eine Aktivoptikelement. Vorzugsweise umfasst die erfindungsgemässe Vorrichtung Mittel zum getrennten Betätigen des Aktivoptikelements in einzelnen Zeitintervallen und Mittel zum mit der Betätigung des Aktivoptikelements synchronisierten Auslesen der Spektralkanäle. Vorzugsweise sind die entsprechenden Zeitfenster mit Sensoren synchronisiert, welche der zu korrigierenden Strahlung entsprechen. Die Sensoren werden vorzugsweise voneinander unabhängig ausgelesen. Für jedes Zeitfenster erfolgt eine unterschiedliche, dem zu korrigierenden Spektralkanal angepasste Deformation des Aktivoptikelements.

Durch das Zeitmultiplexverfahren ist eine individuelle und exaktere Korrektur der einzelnen Spektralkanäle möglich, als dies bei einer gesamten und gleichzeitigen Korrektur sämtlicher Spektralkanäle möglich wäre. In den entsprechenden Zeitfenstern wird mindestens ein Aktivoptikelement wie vorstehend beschrieben derart deformiert, dass es die im entsprechenden Zeitfenster zu behandelnde Restabberation eines Spektralkanals exakt korrigieren kann. Zur Restabberations-Korrektur z.B. des LWIR-Spektralkanals ist eine andere Deformation des Aktivoptikelements erforderlich als zum Beispiel zur Restabberations-Korrektur des VIS-Spektralkanals. Mit Hilfe des Zeitmultiplexverfahrens kann die erforderliche Korrektur mit einem einzigen Aktivoptikelement mit hoher Präzision (vorzugsweise besser als λ/10) durchgeführt werden.

Mit Hilfe des Zeitmultiplexverfahrens ist es auch möglich, die verschiedenen zu detektierenden Strahlungsarten mit unterschiedlicher Gewichtung zu korrigieren. Der Betrieb des Multiplexverfahrens kann beispielsweise derart variiert werden, dass der VIS-Spektralkanal über einen längeren Zeitraum korrigiert wird als die anderen Spektralkanäle. Im Extremfall kann durch entsprechende Taktung sogar ausschliesslich ein bestimmter Spektralkanal, beispielsweise der VIS-Spektralkanal, korrigiert werden. Durch diese Vorgehensweise kann das durch die erfindungsgemässe Vorrichtung erzeugte Bild besser an die physiologischen Seheigenschaften des Menschen angepasst werden.

Nach der Korrektur durch mindestens ein Aktivoptikelement wird die Strahlung entweder direkt oder nach Durchleitung durch ein weiteres multispektrales optisches System entsprechenden Detektoren (beispielsweise FPAs (focal plane arrays)) zugeführt, wo das detektierte Signal gegebenenfalls behandelt und ausgewertet wird. Es ist hierbei möglich, jedem Spektralkanal einen eigenen, sequentiell ansteuerbaren Detektor zuzuordnen. Die Spektralkanäle werden bei dieser Ausführungsform vorgängig durch Strahlteiler beziehungsweise Filter voneinander getrennt und auf die entsprechenden Detektoren beziehungsweise FPAs verteilt. Es ist aber auch möglich, mehrere Spektralkanäle von einem einzigen Detektor beziehungsweise FPA auswerten zu lassen. Beispielsweise können Detektoren eingesetzt werden, welche MWIR- und LWIR-Strahlung beziehungsweise VIS- und SWIR-Strahlung detektieren. Eine Auftrennung der entsprechenden Spektralkänäle (in diesem Fall LWIR- von MWIR-Strahlung beziehungsweise VIS- von SWIR-Strahlung) ist dann nicht erforderlich.

Die von den Detektoren ausgewerteten Bilder können gegebenenfalls nachbehandelt werden. Beispielsweise können die verschiedenen Spektralkanälen entsprechenden Bilder zu einem Bild überlagert werden (Image fusion), wie aus dem Stand der Technik bekannt ist. Auch die unscharfen Bilder, welche in Zeitfenstern aufgenommen werden, in denen keine Korrektur des entsprechenden Spektralkanals stattfindet, können zusammen mit entsprechenden scharfen, korrigierten Bildern des betroffenen Spektralkanals für die kontinuierliche Bilderzeugung durch digitale Verarbeitung kombiniert werden.

Mindestens ein Spektralkanal kann als Sender für z.B. Laser-Entfernungsmesser (Laser Range Finder) oder Laser-Zielmarkierer (Laser Target Designator) verwendet werden

Die vorliegende Erfindung wird nachstehend durch nicht einschränkende Ausführungsformen und Zeichnungen näher erläutert. Es zeigen:
- Fig. 1: eine schematische Darstellung einer Vorrichtung gemäss der vorliegenden Erfindung
- Fig. 2: eine alternative Ausführungsform einer Vorrichtung gemäss der vorliegenden Erfindung
- Fig. 3: eine schematische Darstellung einer multiplexen Korrektur von Restaberration von Spektralkanälen mit der Vorrichtung gemäss Fig. 1
- Fig. 4: eine schematische Darstellung einer weiteren multiplexen Korrektur von Restaberration von Spektralkanälen mit der Vorrichtung gemäss Fig. 2
- Fig. 5: eine schematische Darstellung einer weiteren Vorrichtung gemäss der vorliegenden Erfindung
- Fig. 6: ein Blockdiagramm, in welchem der Betrieb einer Ausführungsform der vorliegenden Erfindung veranschaulicht ist
- Fig. 7: ein Blockdiagramm, in welchem die wesentlichen Schritte der Fertigung einer Ausführungsform der erfindungsgemässen Vorrichtung veranschaulicht sind.

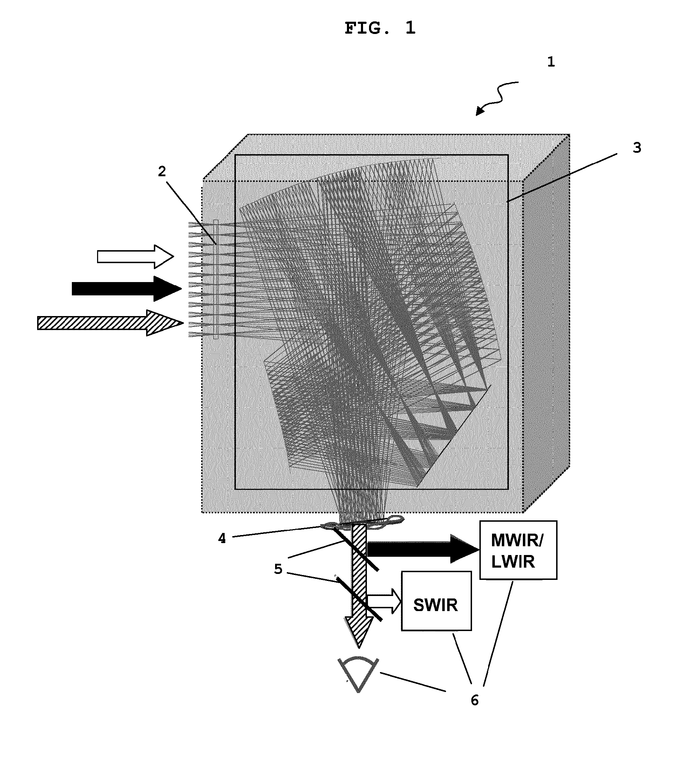

In Fig. 1 ist eine Ausführungsform der erfindungsgemässen Vorrichtung 1 gezeigt. Die Vorrichtung 1 weist eine Eingangsapertur 2 aus multispektralem ZnS (CLEAR grade von der Firma Vitron, Jena, Deutschland) auf, welche für Strahlung aus unterschiedlichen Wellenlängenbereichen durchlässig ist. In Fig. 1 sind schematisch drei verschiedene Spektralkanäle (VIS, SWIR, MWIR/LWIR) als zu detektierende Strahlung gezeigt.

Die Strahlung gelangt in ein multispektrales optisches System 3, welches aus optischen Elementen aufgebaut ist, die von allen Spektralkanälen gemeinsam verwendet werden. Erfindungsgemäss bevorzugt werden reflektive optische Elemente eingesetzt. In der Ausführungsform gemäss Fig. 1 handelt es sich um vier Al-Spiegel mit einer Schutzbeschichtung (SwissOptic AG).

Aus dem multispektralen optischen System 3 wird die Strahlung zu einem Aktivoptikelement 4 geleitet. Gemäss der in Fig. 1 gezeigten Ausführungsform handelt es sich bei dem Aktivoptikelement 4 um einen flexiblen Spiegel (37-Kanal MMDM (micromachined deformable mirror system) mit Al-Beschichtung mit Steuerung USB-DAS-40 von der Firma Flexible Optical B.V., Rijswijk, Niederlande), dessen Form durch Signale deformiert werden kann, welche von einem (nicht gezeigten) Prozessor generiert werden. Der Prozessor generiert die Signale anhand von Informationen, die entweder auf einem Speichermodul in der Vorrichtung abgelegt sind oder durch (nicht gezeigte) Sensoren ermittelt werden. Mit Hilfe der Aktivoptikelements 4 wird wie vorstehend beschrieben eine Korrektur der Spektralkanäle zur Verringerung von Restaberration durchgeführt.

Bei der Vorrichtung gemäss Fig. 1 werden die korrigierten Spektralkanäle über das multispektrale optische System 3 zu Strahlteilern 5 (erhältlich von SwissOptic AG) gelangt, welche eine Auftrennung der Spektralkanäle bewirken. Die separierten Spektralkanäle werden anschliessend durch die separaten Spektralkanaloptiken entsprechenden Detektoren 6 zugeführt. In der Vorrichtung gemäss Fig. 1 sind zwei, wenn direkte visuelle Beobachtung im sichtbaren Kanal ohne Detektor realisiert wird, beziehungsweise drei Detektoren (für sichtbare Strahlung, für SWIR-Strahlung und für MWIR/LWIR-Strahlung) vorhanden. In der Vorrichtung gemäss Fig. 1 werden als Detektoren für den MWIR- und LWIR-Bereich ColiR-640ML Dual band IR-Module der Firma AIM Infrarot Module GmbH, Heilbronn, Deutschland, und als Detektor für den SWIR-Bereich ein hochaufgelöstes gekühltes SWIR-Modul XSW-640 der Firma Xenics N.V., Leuven, Belgien, eingesetzt.

Wie in Fig. 1 gezeigt wird vorzugsweise durch den ersten Strahlteiler 5 MWIR- und LWIR-Strahlung zum entsprechenden Detektor 6 reflektiert, während SWIR- und VIS-Strahlung durch den ersten Strahlteiler 5 tritt. Am zweiten Strahlteiler 5 wird anschliessend SWIR-Strahlung zum entsprechenden Detektor 6 reflektiert, während VIS-Strahlung durch den zweiten Strahlteiler 5 tritt.

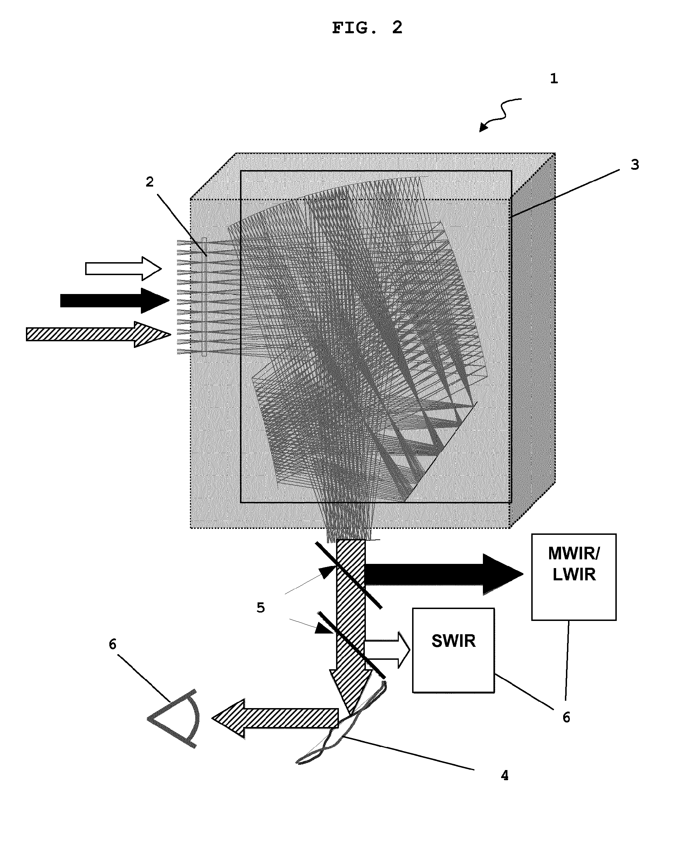

In Fig. 2 ist eine Ausführungsform der erfindungsgemässen Vorrichtung 1 gezeigt, wobei gleiche Bezugszeichen identische Bauteile beschreiben. Im Gegensatz zur Ausführungsform gemäss Fig. 1 befindet sich das Aktivoptikelement 4 nicht zwischen dem multispektralen optischen System 3 und den Strahlteilern 5, sondern ist im Strahlengang hinter den Strahlteilern 5 angeordnet. Es erfolgt bei dieser Ausführungsform somit nur eine Korrektur der Restabberation des VIS-Spektralkanals statt.

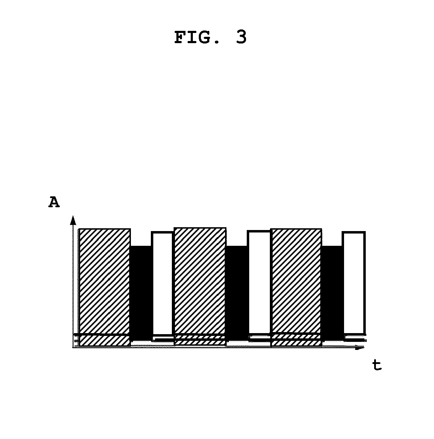

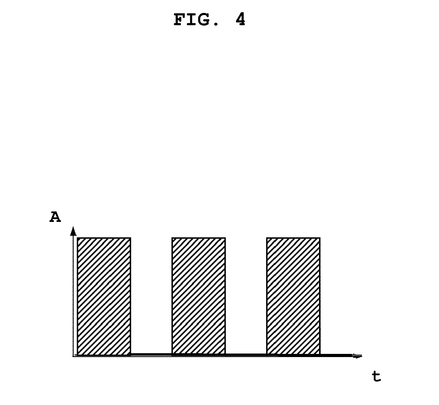

In Fig. 3 ist eine multiplexe Korrektur von Spektralkanälen mit Hilfe der Vorrichtung gemäss Fig. 1 gezeigt, wobei gleiche Bezugszeichen identische Bauteile beschreiben. Wie aus dem Amplitude(A)- Zeit(t)-Diagramm ersichtlich ist, werden in bestimmten Zeitabschnitten vornehmlich der sichtbare Spektralkanal (gestrichtelte Balken), der SWIR-Spektralkanal (weisse Balken) oder der MWIR/LWIR-Spektralkanal (schwarze Balken) mittels des Aktivoptikelements (4) korrigiert und synchronisiert ausgegeben. In Fig. 4 ist eine weitere multiplexe Korrektur von Spektralkanälen mit Hilfe der Vorrichtung gemäss Fig. 2 gezeigt, wobei gleiche Bezugszeichen identische Bauteile beschreiben. Hier wird nur der sichtbare Spektralkanal (gestrichelte Balken) korrigiert. Eine Restabberationskorrektur anderer Spektralkanäle findet nicht statt, weil sie bereits durch die Grundausführung des multispektralen Systems und der IR-Spektralkanäle ausreichend korrigiert sind. (Die Wirksamkeit verschiedener Toleranzen optischer Elemente in Bezug auf die Systemfunktion ist wellenlängenabhängig. Daher sind die Toleranzen z.B. im MWIR-Bereich im Vergleich zum sichtbaren Spektralbereich um den Faktor ca. 6 bis 9 entspannter).

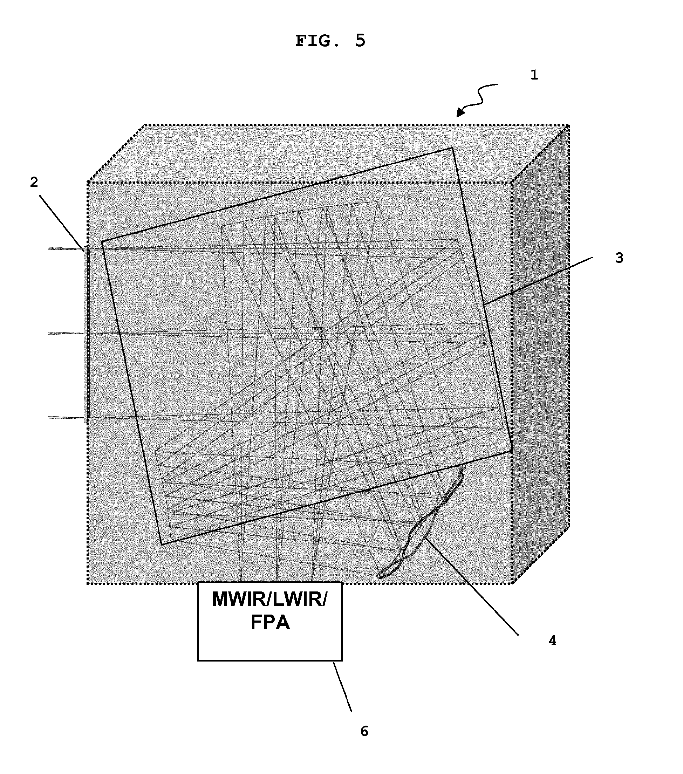

In Fig. 5 ist eine weitere Ausführungsform der erfindungsgemässen Vorrichtung 1 gezeigt, wobei gleiche Bezugszeichen identische Bauteile beschreiben. Im Unterschied zur Ausführungsform gemäss Fig. 1 weist die Ausführungsform gemäss Fig. 4 nur einen einzigen Detektor 6, der beispielsweise die MWIR- und LWIR-Spektralkanäle gemeinsam auswertet. Ein Strahlteiler ist bei dieser Ausführungsform nicht erforderlich.

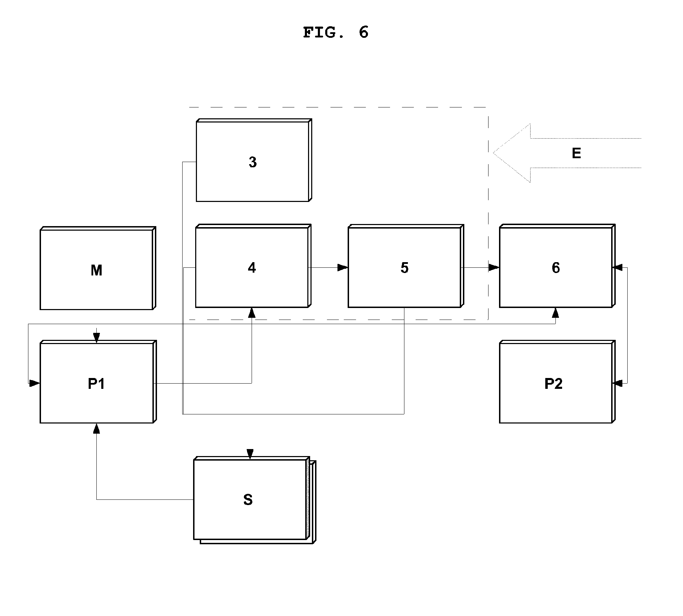

In Fig. 6 ist ein Blockdiagramm gezeigt, in welchem der Betrieb einer Ausführungsform der vorliegenden Erfindung veranschaulicht ist. Die Eingangsstrahlung E gelangt zum multispektralen optischen System 3 und anschliessend zu einem Aktivoptikelement 4. Die korrigierten Spektralkanäle werden zu den Spektralkanal-Optiken 5 (wie Strahlteiler oder Linsen) und von diesen zu den Bild-Signal-Detektoren 6 geführt.

Das Aktivoptikelement 4 wird über einen Steuer-Prozessor P1 gesteuert. Die zur Steuerung des Aktivoptikelements 4 erforderlichen Daten sind vorab ermittelt und in einem Datenspeicher M hinterlegt worden. Wahlweise oder zusätzlich werden Daten mit Hilfe von Temperatur- bzw. Drucksensoren S erhoben, welche mit dem multispektralen optischen System 3 und den Spektralkanal-Optiken 5 verbunden sind. Die so ermittelten Daten werden von den Temperatur- bzw. Drucksensoren S an den Steuer-Prozessor P1 weiter geleitet.

Der Steuer-Prozessor P1 und ein Bild-Signal-Prozessor P2 sind dem den Bild-Signal-Detektoren 6 synchronisiert, wodurch eine Korrektur von Restabberation nach einem Zeitmultiplexverfahren durchführbar ist.

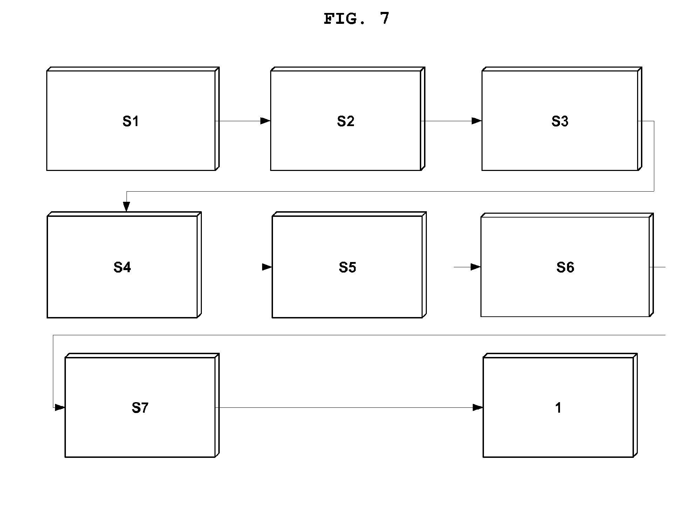

In Fig. 7 ist ein Blockdiagramm gezeigt, in welchem die wesentlichen Schritte der Fertigung einer Ausführungsform der erfindungsgemässen Vorrichtung veranschaulicht sind. In einem ersten Schritt S1 wird ein Design eines optischen Systems mit mässiger Abberationskorrektur sämtlicher Spektralkanäle angefertigt. Im Schritt S2 erfolgt anhand dieses Designs die Produktion der erforderlichen optischen bzw. optomechanischen Teile, wobei aufgrund der vorgesehenen massigen Abberationskorrektur sämtlicher Spektralkanäle entspannte Toleranzen möglich sind. Mit anderen Worten müssen keine übermässig hohen Massstäbe an die Präzision der anzufertigenden optischen bzw. optomechanischen Teile angelegt werden. In einem dritten Schritt S3 wird das optische System aus den gefertigten optischen bzw. optomechanischen Teilen mit mechanischer Genauigkeit montiert. Anschliessend werden im Schritt S4 die Steuer- und Bild-Signal-Prozessoren P1 und P2 programmiert. Eine optionale optische Justierung unter Einsatz von Aktivoptikelementen 4 wird gegebenenfalls in einem Schritt S5 durchgeführt. Im Schritt S6 werden Abberationskorrekturdaten für alle Spektralkanäle unter spezifischen Umweltbedingungen ermittelt und in einem Schritt S7 im permanenten Speicher M der erfindungsgemässen Vorrichtung abgelegt. Die erfindungsgemässe Vorrichtung 1 ist somit fertiggestellt.

## Patentansprüche

1. Vorrichtung (1), umfassend eine Eingangsapertur (2), mindestens ein multispektrales optisches System (3) und mindestens ein Aktivoptikelement (4), welches bei nach Cassegrain-Schema aufgebauten multispektralen optischen Systemen ausserhalb des mindestens einen multispektralen optischen Systems (3) und bei anderen multispektralen optischen Systemen ausserhalb, zwischen oder innerhalb der multispektralen optischen Systeme (3) angeordnet ist.

2. Vorrichtung nach Anspruch 1, **dadurch gekennzeichnet, dass** weiterhin derart ausgebildete Steuerelemente für das mindestens eine Aktivoptikelement bereitgestellt sind, dass sie eine Abberationskorrektur von Spektralkanälen durch das mindestens eine Aktivoptikelement (4) nach einem Zeitmultiplexverfahren bewirken.

3. Vorrichtung (1), umfassend eine Eingangsapertur (2), mindestens ein multispektrales optisches System (3), mindestens ein Aktivoptikelement (4), sowie derart ausgebildete Steuerelemente für das mindestens eine Aktivoptikelement, dass sie eine Abberationskorrektur von Spektralkanälen durch das mindestens eine Aktivoptikelement (4) nach einem Zeitmultiplexverfahren bewirken.

4. Vorrichtung nach einem der Ansprüche 1 bis 3, **dadurch gekennzeichnet, dass** das multispektrale optische System (3) ein reflektives optisches System ist.

5. Vorrichtung nach einem der Ansprüche 1 bis 4, **dadurch gekennzeichnet, dass** das mindestens eine Aktivoptikelement (4) ein flexibler Spiegel ist.

6. Vorrichtung nach einem der Ansprüche 1 bis 5, **dadurch gekennzeichnet, dass** Strahlteiler (5) oder Filter zur Teilung der Spektralkanäle vorhanden sind.

7. Vorrichtung nach einem der Ansprüche 1 bis 6, **dadurch gekennzeichnet, dass** mindestens ein Detektor (6) zur Erfassung der Spektralkanäle vorhanden ist.

8. Verfahren zur multispektralen Beobachtung, umfassend die Schritte
a) der Einleitung mehrerer Spektralkanäle in eine Vorrichtung (1) durch eine Eingangsapertur (2) zu mindestens einem multispektralen optischen System (3), und
b) die anschliessende Korrektur von Restaberration in den Spektralkanälen mit Hilfe mindestens eines Aktivoptikelements (4), welches bei nach Cassegrain-Schema aufgebauten multispektralen optischen Systemen ausserhalb des mindestens einen multispektralen optischen Systems (3) und bei anderen multispektralen optischen Systemen ausserhalb, zwischen oder innerhalb der multispektralen optischen Systeme (3) angeordnet ist.

9. Verfahren nach Anspruch 8, **dadurch gekennzeichnet, dass** die Korrektur von Restaberration in verschiedenen Spektralkanälen zueinander zeitlich versetzt in einem Zeitmultiplexverfahren erfolgt.

10. Verfahren zur multispektralen Beobachtung, umfassend die Schritte
a) der Einleitung mehrerer Spektralkanäle in eine Vorrichtung (1) durch eine Eingangsapertur (2) zu mindestens einem multispektralen optischen System (3), und
b) die anschliessende Korrektur von Restaberration in den Spektralkanälen mit Hilfe mindestens eines Aktivoptikelements (4), wobei die Abberationskorrektur nach einem Zeitmultiplexverfahren erfolgt.

11. Verfahren nach einem der Ansprüche 8 bis 10, **dadurch gekennzeichnet, dass** die Spektralkanäle ausgewählt sind aus der Gruppe bestehend aus dem sichtbaren Bereich, dem ultravioletten Bereich, dem Nahinfrarotbereich, dem Kurzwellen-Infrarotbereich, dem Mittelwellen-Infrarotbereich, dem Langwellen-Infrarotbereich und Kombinationen davon.

12. Verfahren nach einem der Ansprüche 8 bis 11, **dadurch gekennzeichnet, dass** die Korrektur der Spektralkanäle in definierten Zeitfenstern erfolgt, welche mit Sensoren synchronisiert sind, die den zu korrigierenden Spektralkanälen entsprechen.

13. Verfahren nach einem der Ansprüche 8 bis 12, **dadurch gekennzeichnet, dass** die Zeitfenster zur Korrektur von Restaberration in den Spektralkanälen abhängig von den Spektralkanälen unterschiedlich getaktet sind.

14. Verfahren nach einem der Ansprüche 8 bis 13, **dadurch gekennzeichnet, dass** die Spektralkanäle gegebenenfalls voneinander getrennt und durch mindestens einen Detektor (6) ausgewertet werden.

15. Verfahren nach einem der Ansprüche 8 bis 14, **dadurch gekennzeichnet, dass** die in unterschiedlichen Spektralkanälen aufgenommenen Bilder zu einem Bild überlagert oder unkorrigierte und korrigierte Bilder von Spektralkanälen zur kontinuierlichen Bilderzeugung durch digitale Verarbeitung kombiniert werden.
